# EUROPEAN PATENT SPECIFICATION

(11) **EP 2 738 133 B1**
(45) Date of publication and mention of the grant of the patent: **17.05.2017**
(21) Application number: 12194991.1
(22) Date of filing: 30.11.2012
(51) Int. Cl.: B66C 1/10, F03D 1/00

(54) **Lifter for handling a rotor blade of a wind turbine and method of operating the same**
Heber zur Handhabung einer Windturbinenlaufschaufel und Betriebsverfahren dafür
Dispositif de levage pour manipuler une pale de rotor d'éolienne et son procédé de fonctionnement

(43) Date of publication of application: 04.06.2014
(73) Proprietor: Areva Wind GmbH, 27572 Bremerhaven (DE)
(72) Inventor: Monux Belloso, Oscar, 28205 Bremen (DE)
(74) Representative: Prinz & Partner mbB

(56) References cited:
- EP-A1- 2 589 795
- EP-A1- 2 708 487
- EP-A2- 2 075 467
- WO-A1-2010/124744
- WO-A1-2011/050999
- WO-A1-2012/095112
- WO-A2-2012/167788
- US-A1- 2008 006 806

## Description

### FIELD OF THE INVENTION

The invention relates to a lifter for handling a rotor blade of a wind turbine, a system comprising a lifter and a rotor blade and further to a method of operating the lifter.

### BACKGROUND

A rotor blade of a wind turbine (also referred to as a wind power plant or a wind energy converter) is a substantially hollow structure having several structural reinforcement members, which are arranged inside the rotor blade. An outer surface of the rotor blade, which is mainly represented by a pressure side and a suction side, is not entirely supported by the structural reinforcement inside the rotor blade. Consequently, a rotor blade of a wind generator has to be handled with care to prevent the risk for a damage of the rotor blade even under its own weight. In particular during installation of a rotor blade on a rotor hub of a wind generator, the rotor blade must be grabbed in predetermined grabbing areas which are designated to support the weight of the rotor blade.

A commonly used method for handling a rotor blade is to apply two textile bands which are attached to a crane hook. However, the use of textile bands is restricted to handling of the rotor blade in a substantially horizontal position. More complex handling devices allow a more flexible handling and positioning of the rotor blade. A handling device, also referred to as a rotor blade grabber or lifter, is for example known from WO 2012/095112 A1. The disclosed rotor blade lifter comprises two grabbing jaws each having an antagonistic pair of arms carrying a plurality of pads for supporting the rotor blade in predetermined grabbing areas. However, approach and positioning of the rotor blade lifter has to be done precisely and carefully. Otherwise, the rotor blade may be damaged by the lifter. The alignment of the lifter with respect to the rotor blade may be performed using geometric methods which may be supported by video systems.

However, in particular for installation of rotor blades under offshore conditions, optical methods may be limited by the visibility conditions, such as night, fog, rain, etc. Moreover the position of the marking to grab the blade as being a hand made process is susceptible to errors. Offshore handling of a rotor blade often requires a crane barge having high fix costs per day. If the installation of the rotor blade is delayed due to unfavorable weather conditions or incorrect positioning, this will result in high expenses for the manufacturer or operator of the wind generator.

WO 2010/124744 A1 discloses a grabbing device comprising a sensor, which is adapted to capture a relative distance between the yoke of the grabber and the blade. The sensor applied sensor is, however, an infrared sensor or a laser. Using an optical device is disadvantageous under harsh offshore conditions, for example in rain or fog.

WO 2011/050999 A1 discloses another blade grabber, which applies a belt to fix the rotor blade on a frame 130. An inductive sensor is applied to ensure that a strap moving mechanism securely fixes a shackle carrying one end of the belt in a corresponding hook. The inductive sensor captures the distance between the beams and the blade upon operation of the belt guiding mechanism in order to avoid collision. However, the inductive sensor is only capable of detecting metallic parts. Rotor blades are frequently manufactured from fiber reinforced material for which an inductive sensor is technically not suitable.

US 2008/006806 A1 discloses a lifting assembly having a frame structure with a translatable support element. The support element has a load-bearing surface and a screw-form. The screw-form is threadedly connected to a gear which is in mechanical communication with a power source, which may be an electric motor. The load-bearing surface is fixed to a shaft of the translatable support element and at least a portion of the load-bearing surface is angularly oriented with respect to the shaft. A guide with at least one end fixed to the frame structure is adapted to adjust the rotational orientation of the load-bearing surface. The power sources used to move the support element may be controlled by electronic equipment disposed within and/or fixed to the frame structure of the lifting assembly. The electronic equipment may comprise sensors adapted to receive data regarding position or other characteristics of the support elements or the object being gripped. The sensors may be selected from the group consisting of torque sensors, pressure sensors, position sensors, strain sensors, optical sensors, sonic sensors, seismic sensors, acoustic sensors, inductive sensors, capacitive sensors, magnetic sensors, temperature sensors, vibrations sensors, sway sensors, smart sensors, and weight sensors

WO 2012/167788 A2 discloses a lifting device for connecting two rotor blade segments of a wind turbine at the location of the wind turbine. The lifting device is adapted for being moved in the longitudinal direction of the rotor blade, the lifting device comprises a frame structure, means for supporting and guiding the frame structure in relation to the rotor blade, means for lowering and/or lifting the frame structure in relation to the rotor blade, means for lifting and/or lowering a rotor blade segment. The lifting device may comprise a control system for automatically controlling actuators, hoisting means etc. of the device on the basis of from e.g. gyroscopic sensor(s), pressure sensor(s), optical sensor(s), strain gauge sensor(s) and/or other sensors. EP 2708487 A1 discloses a lifter and a method for lifting a rotor blade that comprises a detector for visual inspection of an invisible mark on a surface of the rotor blade. EP2708487A1 is a document according to Article 54(3) EPC, which however does not determine a plurality of theoretical airfoil profiles along various cross-sections of the rotor blade from a model of the rotor blade.

### SUMMARY

It is an object of the invention, to provide a lifter for handling a rotor blade which may be reliably operated under various weather conditions. Furthermore, it is an object of the invention to provide an improved system comprising a lifter and a rotor blade and a more reliable method of operating a lifter for handling a rotor blade. It is another object of the invention to provide a method for calibrating a system in a lifter.

The object of the invention is achieved by the characterising portion of the independent claims.

Accordingly, a lifter for handling a rotor blade of a wind turbine is provided. The lifter comprises at least one device, in particular a grabbing jaw, for contacting an outer surface of the rotor blade. The lifter further comprises a non-optical wave based system for detecting a position of the rotor blade with respect to the lifter. Within the context of this specification, a position of a rotor blade refers to a distance and to an alignment of the rotor blade with respect to the lifter.

The non-optical wave based system may be configured to perform a distance measurement based on a non-optical measurement. In particular, the non-optical wave based system may be a radar system or a system operating using sound waves, for example an ultrasonic system. Without any limitation to the scope of the invention, further details and characteristics will be explained by making reference to a lifter comprising a radar system having at least one radar transducer. However, the lifter may be similarly provided with ultrasound transducers, for example.

Advantageously, the determination of a position of the rotor blade using a radar system is robust and reliable even under harsh offshore conditions like dust, fog or rain. A radar system will not tend to errors under these conditions like for example a visual system. Furthermore, the radar system offers an advantageous effect: the shorter the distance between the lifter and the blade, the better the resolution of the radar signal. As a result, the determined position of the rotor blade with respect to the lifter becomes more precise and more reliable with decreasing distance between the two parts. This is advantageous because the risk for damage of the rotor blade, which is due to a collision between the rotor blade and the lifter, increases with decreasing distance between the two parts. The radar system advantageously provides a signal which becomes more precise and more reliable when the lifter approaches the rotor blade. This allows a precise and careful guidance of the lifter, in particular in critical phases of the grabbing of the rotor blade.

The lifter according to aspects of the invention may be provided with additional systems for measuring a position of the rotor blade with respect to the lifter. For example, the radar system may be combined with an ultrasound system, a video inspection system and / or a laser positioning system. Advantageously, the different systems do not disturb each other and there is no interference between the measured values. Similarly, there is no interference between a radar system and for example a GPS measurement, a positioning system which uses RFID, an ultrasonic position measurement or inclinometers. Each or a plurality of these alternative systems for position measurement may be advantageously combined in a lifter according to further embodiments of the invention. The various systems may complement and support each other.

A lifter having a radar system is further advantageous because it is not necessary to mark the rotor blades of the wind turbine. If the alignment of the rotor blade is based on visual inspection, for example using a video system, or the position of the rotor blade is determined using an RFID system, the rotor blade must be provided with suitable marks. Furthermore, a radar system offers a high detection range, which may be about 30 m or above.

According to an embodiment of the invention, the lifter may comprise at least one inclinometer for determining an orientation of the lifter. In particular, this inclinometer may be configured to determine a horizontal tilting angle of the lifter, which may be due to a rotation of the lifter around a vertical transverse direction. In another embodiment of the invention, the lifter may comprise more than one inclinometer, in particular one inclinometer for every direction of space. More particularly, the lifter may comprise one inclinometer for the main body and two more inclinometers for each grabbing jaw. Advantageously, this system of inclinometers allows determining the orientation of the lifter. Based on information about the orientation in space, the lifter may be aligned with respect to the rotor blade.

According to an advantageous embodiment of the invention, the at least one device for contacting the outer surface of the rotor blade may project from a supporting structure of the lifter in an approach direction. The radar system may comprise a radar transducer having a direction of emission, which substantially directs towards the approach direction. For grabbing the rotor blade, the lifter approaches the rotor blade substantially in the approach direction. Two radar transducers may be allocated along the structure of the lifter, which may be substantially parallel to the rotor blade, when the lifter approaches the rotor blade. The two radar transducers may be arranged on the lifter and may have a direction of emission in a direction such that the grabbing jaws do not cause reflections.

The at least one radar transducer may be configured to emit a primary radar signal and to detect a secondary radar signal, which is reflected on the rotor blade. A secondary radar signal is also known as an echo signal. The position of the rotor blade may be determined using this at least one radar transducer.

Advantageously, the lifter may comprise a supporting structure, a first device and a second device for contacting the outer surface of the rotor blade. The first device and the second device may be mounted on the supporting structure and may have a clearance between each other which defines a first transverse direction. The radar system may comprise a first radar transducer and a second radar transducer which may be mounted on the supporting structure and which may have a second clearance between each other. The second clearance defines a second transverse direction. The first and second transverse direction may be substantially parallel to each other. In particular, the second clearance may be greater than the first clearance. The lifter, according to this embodiment of the invention, may determine a tilting angle between a transverse direction of the lifter and a longitudinal direction of the rotor blade. The determination of the tilting angle may be performed based on triangulation. The second clearance between the first and second radar transducer defines a base length for the triangulation. The second clearance between the first and second radar transducer defines a base length for the triangulation. This distance may be corrected once a change in the airfoil profile of the rotor blade is detected. A minimum distance will be used as a primary point to determine the profile of the rotor blade. A second point will give an approximation of the tilting angle. The accuracy of triangulation increases with increasing base length. A maximum base length and a maximum accuracy may be achieved when the first radar transducer and the second radar transducer are arranged at substantially opposite ends of the lifter, when considered in transverse direction.

According to another advantageous embodiment of the invention, the first device is a first grabbing jaw and the second device is a second grabbing jaw. Each grabbing jaw may comprise a pair of antagonistic arms, which may be movable or swivelable with respect to each other. A direction of movement of at least one of the arms of the grabbing jaw defines a grabbing plane. In particular, the approach direction may be parallel to the grabbing plane. The first and second radar transducer has a first and second direction of emission, respectively. The directions of emission of the radar transducers may be tilted with respect to the grabbing plane. In particular, the direction of emission of the first radar transducer may be tilted towards the second radar transducer. Similarly, the direction of emission of the second radar transducer may be tilted towards the first radar transducer. According to an advantageous embodiment of the invention, a tilting angle between the grabbing plane and the direction of emission of the radar transducers may be greater than zero and lower than the dispersion of the radar itself, which is usually lower than 45°. In particular, the tilting angle may be smaller than an angle, which is defined by an aperture angle of the beam of the radar transducer. In particular, the angle may be smaller than 15° and greater than 0°. According to another embodiment of the invention, the tiling angle may be substantially equal to 5°.

Advantageously, the tilting of the radar transducers improves the reliability of a measurement of the tilting angle between the transverse direction of the lifter and the longitudinal direction of the blade. The mentioned ranges and values for the tilting angle of the radar transducers turned out to be advantageous in various experiments.

In another advantageous embodiment of the invention, the radar system comprises a third radar transducer and a fourth radar transducer. The third radar transducer may be mounted on a first arm and the fourth radar transducer may be mounted on a second arm of the grabbing jaw. In particular, a direction of emission of the third radar transducer and a direction of emission of the fourth radar transducer intersect in an obtuse angle. They may be arranged to be substantially opposite to each other. This may be considered when the grabbing jaw is in a closed position. The third and fourth radar transducer may be activated during the passage of the grabbing jaw over the rotor blade in order to detect and to avoid possible collisions with the rotor blade during operation of the lifter. The measured values of the third and fourth radar transducer may be applied to detect or to verify a position of the arms of the grabbing jaw. Furthermore, once the lifter has successfully approached the rotor blade, the third and fourth radar transducer may provide measurement values indicating a distance between a respective one of the arms and the rotor blade. This may be helpful for guiding the opened arms of the grabbing jaw across the rotor blade.

According to still another embodiment of the invention, the lifter may be configured to activate the first and second radar transducer upon activation of the lifter itself. However, if a distance between the lifter and the rotor blade is greater than a predefined small distance, the radar transducers may be operated discontinuously. This predefined distance depends on the size of the rotor blade and the reflection of the rotor blade. In particular, this predefined distance may be approx. 4 m. When the distance between the lifter and the rotor blade drops below 1,5 m, the radar transducers may be switched to continuous operation. This stepwise activation of the radar transducers may be advantageous with respect to the power consumption of the lifter, which may be a battery powered device. A reduction of the power consumption will extend the lifetime of the batteries. This increases the operating time of the lifter.

According to another advantageous embodiment of the invention, the lifter may further comprise a fifth radar transducer, which may be mounted on either the first or the second arm of the grabbing jaw. The fifth radar transducer may be arranged on the grabbing jaw to have a direction of emission which is tilted with respect to a line connecting the third and fourth radar transducer. Advantageously, an airfoil profile of the rotor blade may be inspected from different angles. For determination of an airfoil profile along a cross-section of the rotor blade, it may be favorable to substantially arrange the third, fourth and fifth radar transducer in a common plane. The common plane may be further substantially parallel to the grabbing plane.

Advantageously, the lifter may further comprise a control unit having a model of the rotor blade. According to this embodiment of the invention, the control unit may be configured to evaluate measured values of at least one of the third to fifth radar transducer. Based on these values, the control unit may determine at least a section of an airfoil profile along a cross section of the rotor blade. Furthermore, the control unit may be configured to calculate a plurality of theoretical airfoil profiles along various cross sections of the rotor blade from the model of the rotor blade. The control unit of the lifter may be further configured to match at least the determined section of the airfoil profile to one of the plurality of theoretical airfoil profiles, which have been calculated for various cross sections of the rotor blade. A longitudinal position of the lifter with respect to the rotor blade may be calculated based on the result of the matching.

In particular, the step of matching the airfoil profiles may comprise a determination of the deviation between the theoretical airfoil profile and the determined airfoil profile. The airfoil of a rotor blade varies along its length. An airfoil profile, which is considered along a certain cross section of the rotor blade, may be identified with this certain longitudinal position. In other words, a certain airfoil profile may be clearly identified with the longitudinal position of the corresponding cross section. The determined airfoil profile may be matched to a theoretical airfoil profile (out of the plurality of theoretical airfoil profiles), which has a minimum deviation. A longitudinal position of the matched theoretical airfoil profile is known. Based on this information, a longitudinal position of the lifter may be calculated. Advantageously, the longitudinal position of the lifter with respect to the rotor blade may be determined without a need for any marking on the blade. This is particularly advantageous because there is no guarantee that the marking is done accurately.

The radar system may be operated in the K-band having a frequency within a range of 12.8 GHz to 18 GHz. This advantageously applies to all embodiments of the invention.

According to another advantageous aspect of the invention, a system comprising a lifter according to aspects of the invention and a rotor blade is provided. The rotor blade may comprise a radar reflector projecting substantially between a root and a tip of the rotor blade. In particular, the radar reflector may be embedded in the rotor blade. Furthermore, the radar reflector may be a lightning protection mesh, which is embedded in the rotor blade. A carbon fiber structure of the blade itself may also form the radar reflector. The radar reflector will enhance the visibility of the rotor blade to the radar system.

According to still another advantageous aspect of the invention, a method of operating a lifter for handling a rotor blade of a wind turbine is provided. The lifter comprises at least one device, in particular a grabbing jaw, for contacting an outer surface of the rotor blade. The lifter further comprises a non-optical wave based system. In particular, this may be a radar system. However, also an ultrasound system may be applied. Without any limitation of the scope of the invention, reference will be made to a radar system. This radar system is configured for emission of a primary radar signal and for detection of a secondary radar signal. A primary radar signal is emitted in a direction of the rotor blade. A secondary radar signal, which has been reflected on the rotor blade, is detected. The secondary radar signal is analyzed to determine a position of the rotor blade with respect to the lifter. Same or similar advantages which have been already mentioned with respect to the lifter according to aspects of the invention apply to the method according of aspects of the invention in a same or similar way and will not be repeated.

At least a section of an airfoil profile along a cross section of the rotor blade is determined. A plurality of theoretical airfoil profiles along various cross sections of the rotor blade is determined from the model of the rotor blade. At least the determined section of the airfoil profile is matched to one of the plurality of theoretical airfoil profiles. A longitudinal position of the lifter with respect to the rotor blade is determined based on a result of the matching.

In another advantageous embodiment of the invention, the lifter comprises at least one grabbing jaw having an antagonistic pair of arms which are movable with respect to each other. A direction of movement of at least one of the arms of the grabbing jaw defines a grabbing plane. A tilting angle between the grabbing plane of the lifter and a longitudinal direction of the rotor blade may be determined. Furthermore, a plurality of tilted theoretical airfoil profiles along tilted cross sections of the rotor blade may be determined from the model. The tilted airfoil profiles may be tilted with respect to the longitudinal direction of the model rotor blade by an angle which is substantially equal to the determined tilting angle. Advantageously, a longitudinal direction of the lifter may be determined even if the lifter is tilted with respect to the rotor blade. The determined longitudinal direction can be averaged with both profiles, resulting a more reliable distance measurement.

The determined longitudinal direction may also be determined by matching the measured airfoil profile with an averaged theoretical airfoil profile. The tilted theoretical airfoil profiles may be assigned to discrete tilted cross sections at certain positions of the rotor blade. By averaging the theoretical airfoil profiles from the model, longitudinal positions between the discrete positions along which theoretical airfoil profiles are calculated, may be determined. A more precise distance measurement may be performed.

According to still another aspect of the invention, a method of calibrating the non-optical wave based system, in particular a radar system, in a lifter according to aspects of the invention is provided. The method of calibrating may be a part of the method of operating the lifter according to aspects of the invention. For example, the calibration may be at the beginning of the operation of the lifter.

According to the method of calibrating the non-optical wave based system, an optical device, in particular a laser system, may be applied to measure the atmospheric conditions. For example, an atmospheric pressure, the humidity and / or a salinity of the atmosphere may be determined. This information may be applied to calibrate the transducers of the non-optical wave based system, in particular the radar transducers. The determined atmospheric conditions may be taken into account for the distance measurement of the transducers. Furthermore, an alternative or additional method for calibrating the non-optical wave based system, in particular the radar system, may be provided. A metallic part or a rotor blade part may be allocated in front of a transducer at a known distance. A measurement may be performed and the measured values may be read out. The measurement values of the transducer may be matched with the known distance of the object, i.e. the metallic part or the rotor blade part. A measured distance may be matched with the known distance of the object and the transducer may be calibrated to the atmospheric conditions. In particular, the transducer may be calibrated to a degree of salinity, humidity and / or to an atmospheric pressure.

### BRIEF DESCRIPTION OF DRAWINGS

Further aspects and characteristics of the invention ensue from the following description of preferred embodiments of the invention with reference to the accompanying drawings, wherein
FIG. 1 is a simplified perspective view showing a lifter according to an embodiment of the invention which is going to grab a rotor blade of a wind turbine,
FIG. 2 is a simplified front side view of the lifter,
FIG. 3 is a simplified top view showing the lifter, which approaches a rotor blade,
FIG. 4 is a simplified perspective view showing a lifter according to another embodiment of the invention, wherein the lifter is going to grab a rotor blade,
FIG. 5 and 6 are simplified side views showing grabbing jaws of a lifter according to an embodiment of the invention,
FIG. 7 is a simplified top view showing a simplified airfoil profile along a cross-section of a rotor blade and radar transducers which are arranged around the rotor blade,
FIG. 8 is a simplified detailed top view of a rotor blade, wherein a plurality of cross-sections is illustrated along which an airfoil profile may be calculated from a model of the rotor blade and
FIG. 9 is another simplified top view of a lifter according to another embodiment of the invention.

### DETAILED DESCRIPTION OF AN EXAMPLE EMBODIMENT

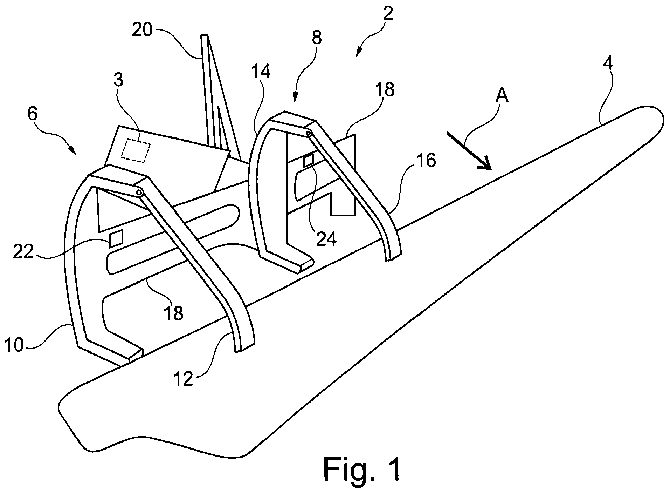

FIG. 1 is a simplified perspective view showing a lifter 2 according to a first embodiment of the invention. FIG. 1 illustrates a situation in which the lifter 2 is going to grab a rotor blade 4 of a wind turbine. The lifter 2 comprises a first device 6 and a second device 8 for contacting an outer surface of the rotor blade 4. The outer surface of the rotor blade 4 is mainly represented by a pressure side and a suction side. The first and second device 6, 8 each carries a plurality of pads (not shown) for supporting the rotor blade 4 in predetermined grabbing areas. Notwithstanding the devices 6, 8 for contacting the outer surface of the rotor blade 4 may be configured to have various designs reference will be made to an embodiment of a lifter 4 having grabbing jaws. The first device 6 for contacting an outer surface of the rotor blade 4 is a first grabbing jaw 6. The second device 8 for contacting an outer surface of the rotor blade 4 is a second grabbing jaw 8.

The first grabbing jaw 6 comprises a first arm 10 and a second arm 12. Similarly, the second grabbing jaw 8 comprises a first arm 14 and a second arm 16. The first arm 10 of the first grabbing jaw 6 and the first arm 14 of the second grabbing jaw 8 are mounted on a supporting structure 18. The second arms 12, 16 of the grabbing jaws 6, 8 are pivotably coupled to the first arms 10, 14, respectively. FIG. 1 shows the grabbing jaws 6, 8 in opened position. In a closed position of the grabbing jaws 6, 8, contact pads (not shown) which may be arranged on the arms 10, 12, 14, 16 of the grabbing jaws 6, 8 support the outer surface of the rotor blade 4 to lift and handle a same in particular during installation on a rotor hub of a wind turbine. The lifter 2 itself may be handled using a crane. A connecting member 20 may be configured to be mounted on for example a crane hook during operation of the lifter 2.

The lifter 2 may be provided with a radar system for detecting a position of the rotor blade 4 with respect to the lifter 2. The radar system may comprise a plurality of radar transducers which may be arranged at various positions of the lifter 2. According to the embodiment in FIG. 1, the radar system comprises a first radar transducer 22 and a second radar transducer 24.

According to another embodiment of the invention, the lifter 2 may be provided with non-optical wave based system, which may be configured to perform a distance measurement based on a non-optical measurement. In particular, the non-optical wave based system may be a radar system. However, the system may be a system operating using sound waves, for example an ultrasonic system. The lifter 2 may be similarly provided with ultrasound transducers, which may be arranged on the lifter in a similar way as the radar transducers. In particular, the first radar transducer 22 and a second radar transducer 24 may be replaced by suitable ultrasound transducers, for example.

The first radar transducer 22 and the second radar transducer 24 may be mounted on the supporting structure 18 of the lifter 2. A direction of emission of at least one of the radar transducers 22, 24 may be aligned towards an approach direction A of the lifter 2. The approach direction A is a direction along which the lifter 2 approaches the rotor blade 4 when it is going to grasp the rotor blade 4. The lifter 2 may further comprise a control unit 3 for acquiring and analyzing the measured values of the radar transducers 22, 24. The control unit 3 may be configured to determine a position of the rotor blade 4 with respect to the lifter 2 on a basis of these measured values. The control unit 3 may be arranged outside the lifter 2. For example, a control station or panel, which may be applied for operating the lifter 2 may comprise the control unit 3.

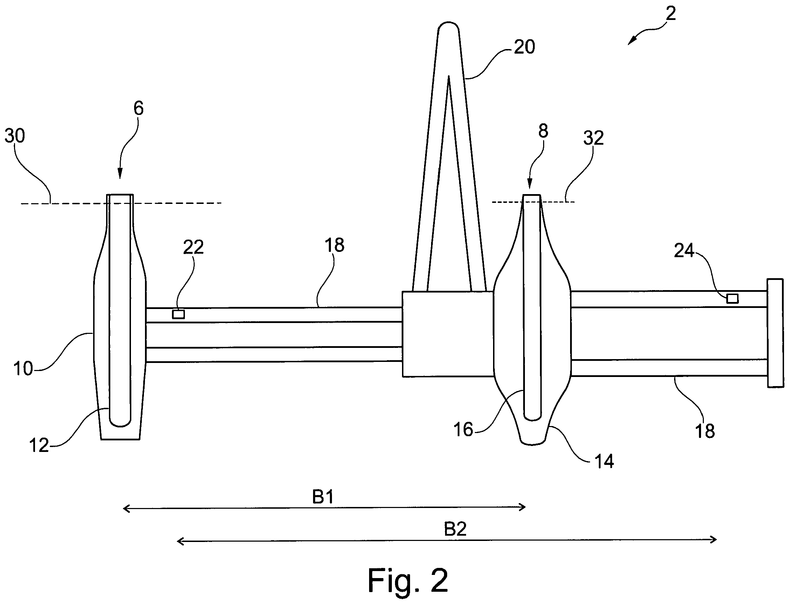

FIG. 2 is a simplified front side view showing the lifter 2 according to the embodiment of FIG. 1. The first grabbing jaw 6 and the second grabbing jaw 8 are mounted on the supporting structure 18 of the lifter 2 to have a first clearance B1 between each other. The first clearance B1 defines a first transverse direction. The first radar transducer 22 and the second radar transducer 24 are mounted on the supporting structure 18 to have a second clearance B2 between each other. The second clearance B2 defines a second transverse direction. In particular, the first transverse direction may be substantially parallel to the second transverse direction. The first and second transverse direction may be substantially equal to a transverse direction of the lifter 2. Furthermore, the second clearance B2 may be greater than the first clearance B1. The antagonistic arms 10, 12 and 14, 16 of a respective one of the grabbing jaws 6, 8 are movable with respect to each other. In particular, a first and a second arm 12, 16 of the first and second grabbing jaw 6, 8 may be movable around a first pivot axis 30 and a second pivot axis 32, respectively.

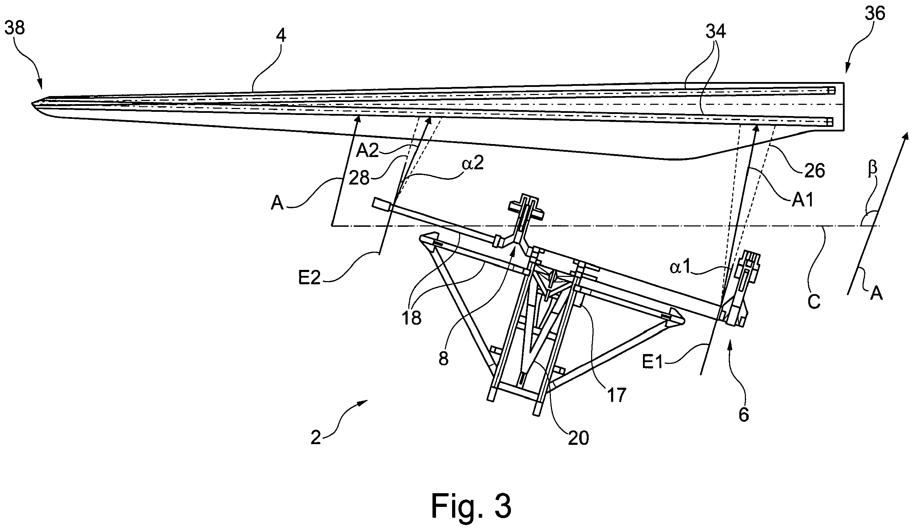

FIG. 3 is a simplified top view showing the lifter 2 and the rotor blade 4, wherein the lifter 2 approaches the rotor blade 4 in the approach direction A. The first radar transducer 22 and the second radar transducer 24 (not shown in FIG. 3) emit a first radar cone 26 and a second radar cone 28, respectively. The first radar cone 26 has a first direction of emission A1. The second radar cone 28 has a second direction of emission A2. A movement of the second arm 12 between an opened position and a closed position of the first grabbing jaw 6 defines a first grabbing plane E1. Similarly, the movement of the second arm 16 of the second grabbing jaw 8 defines a second grabbing plane E2. The grabbing planes E1, E2 may be substantially parallel to each other. They may be perpendicular to a transverse direction of the lifter 2. Furthermore, the approach direction A of the lifter 2 may be substantially parallel to the grabbing planes E1, E2.

A direction of emission A1, A2 of the first radar transducer 22 and the second radar transducer 24 may be tilted with respect to a respective one of the grabbing planes E1, E2. The first direction of emission A1 of the first radar transducer 22 may be tilted towards the second radar transducer 24. Similarly, the second direction of emission A2 of the second radar transducer 24 may be tilted towards the first radar transducer 22. A first tilting angle α1 between the first direction of emission A1 and the first grabbing plane E1 may be greater than zero and lower than 15°. In particular, the first tilting angle α1 may be substantially equal to 5°. A second tiling angle α2 between the second direction of emission A2 and the second grabbing plane E2 may be also greater than zero and lower than 15°. In particular, the second tilting angle α2 may be substantially equal to 5°.

The first radar transducer 22 and the second radar transducer 24 may be configured to emit primary radar signals in a direction towards the rotor blade 4. They may be further configured to detect secondary radar signals or radar echoes, which are reflected on the rotor blade 4. The secondary radar signals may be analyzed the control unit 3 (not shown in FIG. 3), which may be a part of the radar system. In particular, this analysis may reveal a distance between the lifter 2 and the rotor blade 4. Furthermore, a tilting angle β between the lifter 2 and the rotor blade 4 may be determined. The tilting angle β may be an angle between the approach direction A of the lifter 2 and the longitudinal direction C of the rotor blade 4. When approaching the rotor blade 4 with the lifter 2, both, the distance and the tilting angle β may be taken into account to control the operation of the lifter 2. The control of the lifter 2 may be further supported by additional positioning systems. These may be for example: a visual inspection system, a GPS, an ultrasonic system or a laser positioning system. The radar system of the lifter 2 is advantageous inter alia because of its high operating range. However, the lifter 2 may be a battery powered device. To save energy, the radar system may be configured to operate the radar transducers 20, 24 in a discontinuous mode. In particular, if the distance between the rotor blade 4 and the lifter 2 is greater than 4 m, the radar transducers 22, 24 may be active for a time period of 0.4 s which is followed by a pause of 0.05 s, in which the radar transducers 22, 24 are inactive. When the lifter 2 further approaches the rotor blade 4, the radar transducers 22, 24 may be switched to a continuous mode of operation. In particular, the radar system may enter the continuous mode when the distance between the lifter 2 and the rotor blade 4 is lower than 1.5 m.

A distance and a horizontal misalignment (represented by the tilting angle β) of the lifter 2 with respect to the blade 4 may be determined using the radar system. For determination of a vertical misalignment, for example a laser system may be applied. In both systems, the horizontal and vertical misalignment of the lifter 2 with respect to the blade 4 may be determined by trigonometry. Furthermore, a tilting angle, which may be perpendicular to a transverse direction of the lifter 2 (FIG. 2) and perpendicular to the approach direction A may be determined using an inclinometer 17. The inclination, which may be the angle between the ground and the approach direction A, may be useful for guiding the opened arms 12, 16 of the grabbing jaws 6, 8 across the rotor blade 4. Furthermore, the inclinometer 17 may comprise more that one sensor. In particular, there may be one sensor for each direction of space.

To enhance the visibility of the rotor blade 4 in the radar image, the rotor blade 4 may comprise radar reflectors 34. The radar reflectors 34 may substantially project between a root 36 and a tip 38 of the rotor blade 4. In particular, the radar reflectors 34 may be a lightening mesh which is embedded in the rotor blade 4. However, the radar reflectors 34 may be provided by a reflective structure which may be made from carbon fiber. The carbon fiber structure may also be embedded in the rotor blade 4.

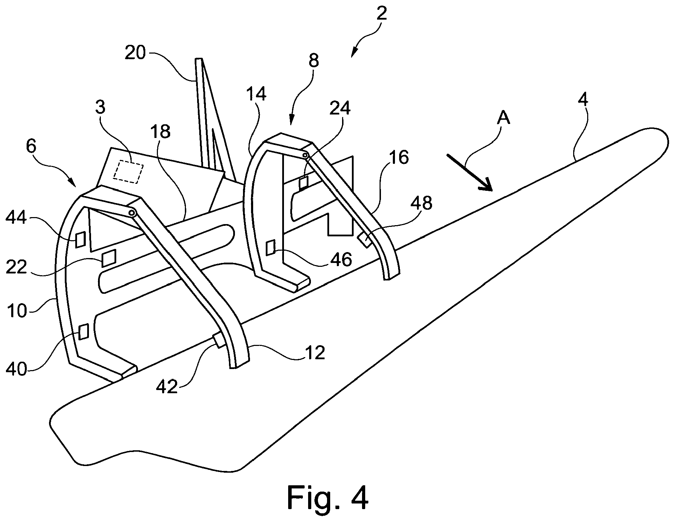

FIG. 4 is another simplified perspective view showing a lifter 2 according to another embodiment of the invention. The lifter 2 is going to grab the rotor blade 4. The lifter 4 may be configured substantially similar to the lifter 4 according to the embodiment in FIGs. 1 to 3. However, the lifter 2 in FIG. 4 is provided with additional radar transducers. The first grabbing jaw 6 comprises a third radar transducer 40 and a fourth radar transducer 42. The third radar transducer 40 may be mounted on the first arm 10 of the first grabbing jaw 6. The fourth radar transducer 42 may be mounted on the second arm 12 of the first grabbing jaw 6. Furthermore, the first grabbing jaw 6 may comprise a fifth radar transducer 44 which may be arranged on the first arm 10.

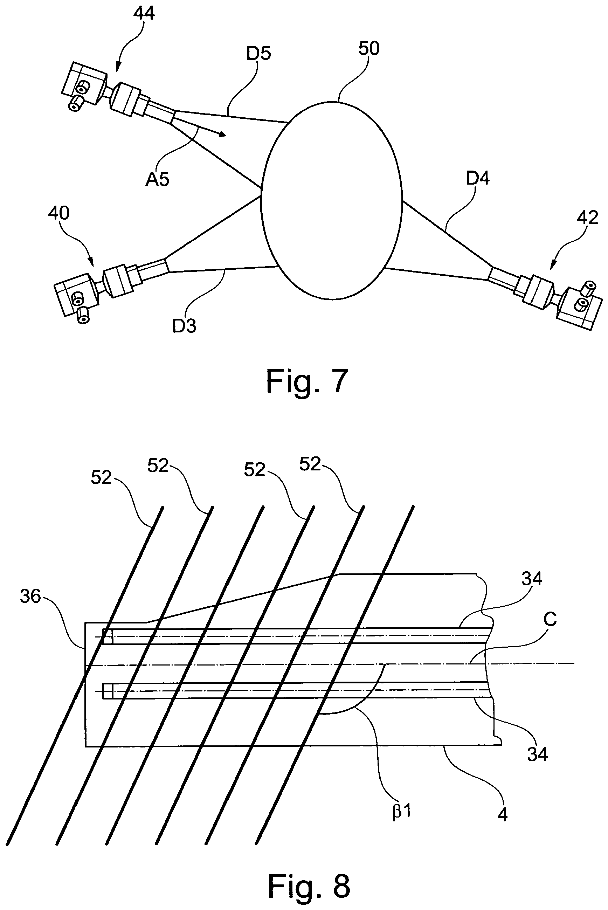

The third to fifth radar transducer 40, 42, 44 may be applied to determine a distance between a respective one of the arms 10, 12 of the first grabbing jaw 6 and the rotor blade 4. The measured values may be used to guide the grabbing jaw 6 across the rotor blade 4. Furthermore, at least a section of an airfoil profile along a cross-section of the rotor blade 4 may be determined based on measured values of the third to fifth radar transducer 40, 42, 44. We will refer to this in more detail when making reference to FIGs. 7 and 8.

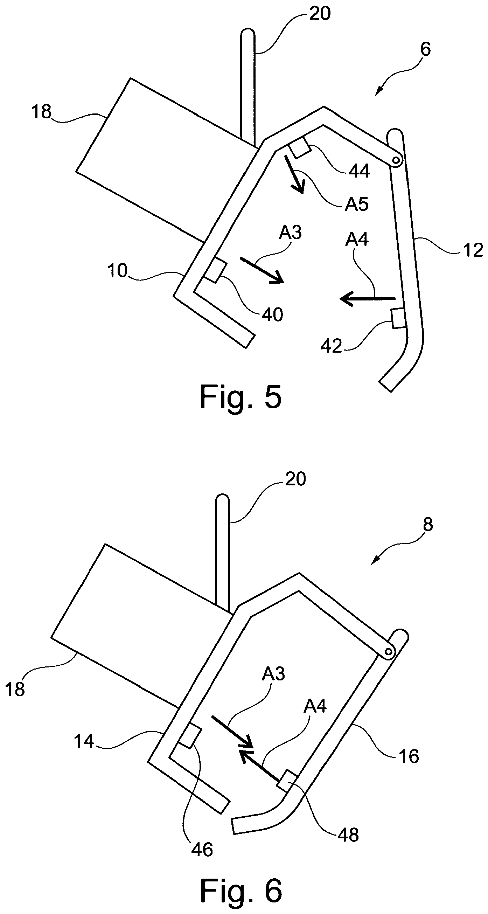

FIG. 5 is a detailed simplified side view showing the first grabbing jaw 6 of the lifter 4 of FIG. 4. The third radar transducer 40, the fourth radar transducer 42 and the fifth radar transducer 44 may be arranged in substantially a common plane, which is the paper plane of the drawing in FIG. 5. This common plane may be parallel to the first grabbing plane E1 (FIG. 3) of the first grabbing jaw 6. However, it is not necessary to arrange the third to fifth radar transducer40, 42, 44 in a common plane. The third radar transducer 40 may have a third direction of emission A3. The fourth radar transducer 42 may have a fourth direction of emission A4. The third direction of emission A3 and the fourth direction of emission A4 may intersect in an obtuse angle. The third radar transducer 40 and the fourth radar transducer 42 may be arranged substantially opposite to each other, when the first grabbing jaw 6 is in a closed position. The fifth radar transducer 44 may have a fifth direction of emission A5. The fifth radar transducer 44 may be mounted on either the first arm 10 or the second arm 12 of the first grabbing jaw 6. According to the embodiment in FIG. 5, the fifth radar transducer 44 is arranged on the first arm 10. The fifth direction of emission A5 may be tilted with respect to a line connecting the third and fourth radar transducer 40, 42. This may be considered when the first grabbing jaw 6 is in a closed position.

In FIG. 6, there is another simplified side view of the lifter 2, which shows the second grabbing jaw 8. The second grabbing jaw 8 is shown in closed position. A radar transducer 46, which corresponds to the third radar transducer 40 at the first grabbing jaw 6, is arranged on the first arm 14. A further radar transducer 48 is arranged on the second arm 16 of the second grabbing jaw 8. This radar transducer 48 corresponds to the fourth radar transducer 42 at the first grabbing jaw 6. The corresponding radar transducers are arranged on a respective one of the grabbing jaws 6, 8 at similar positions and for a similar purpose. The radar transducers 46, 48 may be applied to guide the second grabbing jaw 8 across the rotor blade 4. Similar to the third and fourth radar transducer 40, 42, the radar transducers 46, 48 may be also applied to determine a section of an airfoil profile of the rotor blade 4. However, in most cases it will be sufficient to determine the airfoil profile of the rotor blade 4 at only one of the two grabbing jaws 6, 8. According to the embodiment in FIGs. 4 to 6, this is performed using the first grabbing jaw 6, by way of an example only.

The radar transducers of the lifter may be operated discontinuously according to special scheme. According to this embodiment of the invention, the risk for interference of the radar transducers is minimized. According to this scheme, first radar transducer 22 and the fifth radar transducer 44 may be active for approx. 0,4 s. After a short pause of 0,05 s, the third radar transducer 42 and the radar transducer 48 are active for approx. 0,4 s. Interference between the radar transducers may be omitted. The further radar transducers 24, 42 and 46 may be operated in a continuous mode.

The measured values of the third to fifth radar transducer 40, 42, 44, which are arranged on the first grabbing jaw 6, may be applied to determine at least a section of an airfoil profile of the rotor blade 4 along a cross section of the rotor blade 4. FIG. 7 illustrates this situation in a simplified cross sectional view. The third to fifth radar transducer 40, 42, 44 may be arranged substantially around the rotor blade 4. The respective radar cones D3, D4 and D5 senses a section of the airfoil 50 along a cross section of the rotor blade 4. To omit largely overlapping emission cones D3, D4, D5, a direction of emission A5 of the fifth radar transducer 44 may be tilted with respect to a line connecting the third radar transducer 40 and the fourth radar transducer 42. This may be considered when the grabbing jaw 6 is in a closed position.

A control unit 3 of the lifter 4 (FIG. 4) may comprise a model of the rotor blade 4. For example, a DWG tool kit may be used to generate a dwf-blade model. Based on this theoretical or numerical model of the rotor blade 4, a plurality of theoretical airfoil profiles of the rotor blade 4 may be determined along various cross sections. For example, airfoil profiles may be calculated in slices or cross-sections having a distance of approx. 5 cm. The airfoil of the rotor blade 4 varies along its longitudinal axis C. The airfoil profile along a cross section at a certain longitudinal position of the rotor blade 4 may be identified with this particular longitudinal position. In other words, every airfoil profile may be assigned to a certain cross section and to a particular distance along the longitudinal axis C. The longitudinal distance may be measured for example from the root 36 of the rotor blade 4. Vice versa, a longitudinal distance or position may be determined from the airfoil profile of the rotor blade 4.

The control unit 3 of the lifter 2 may be configured to perform a matching between the determined section of the airfoil profile and the plurality of theoretical airfoil profiles. For example, the determined airfoil profile may be compared to the plurality of theoretical airfoil profiles and a deviation may be calculated. A theoretical airfoil profile may be selected from the plurality of airfoil profiles when the deviation with respect to the determined airfoil profile is minimal. Based on this matching result, a longitudinal position of the theoretical airfoil profile may be determined. Based on this information, a longitudinal position of the lifter 2 with respect to the rotor blade 4 may be determined.

The determination of the longitudinal position of the lifter 2 with respect to the rotor blade 4 may be performed even in a situation when the lifter 2 is tilted with respect to the rotor blade 4 (tilting angle β; FIG. 3). Tilted theoretical airfoil profiles may be calculated from the model of the rotor blade 4. This is illustrated in FIG. 8. A plurality of slices 52 may be defined and tilted theoretical airfoil profiles may be calculated. The slices 52 are tilted with respect to the longitudinal axis C of the rotor blade 4 about an angle β1, which may be substantially equal to the tilting angle β between the approach direction A and the longitudinal axis C of the rotor blade 4. Again, a matching between the theoretical airfoil profiles and the measured airfoil profile is performed. Based on for example a least square matching, one of the theoretical airfoil profiles may be selected. Based on the known longitudinal position of the corresponding slice 52, a longitudinal position of the lifter 2 with respect to the rotor blade 4 may be determined.

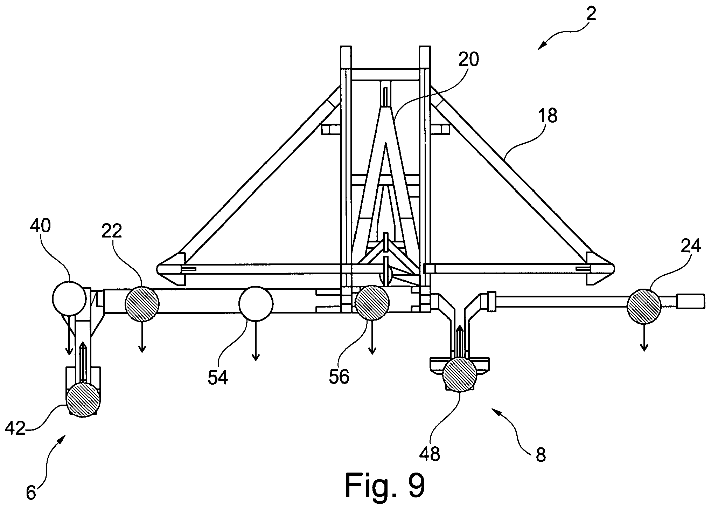

FIG. 9 is another simplified top view showing a lifter 2 according to another embodiment of the invention. The lifter 2 may be configured similar to the lifters 4 according to the embodiments in FIGs. 1 to 6. However, the radar system may comprise a different arrangement of radar transducers. The lifter 2 comprises a first radar transducer 22 and a second radar transducer 24. Furthermore, there is a third radar transducer 40, which may be arranged on a first arm of a first grabbing jaw 6 and a fourth radar transducer 42, which may be arranged in a second arm of the first grabbing jaw 6. A second grabbing jaw 8 comprises a radar transducer 48, which may be arranged on a second arm of the second grabbing jaw 8. The arrangement of the radar transducers 22, 24, 40, 42 and 48 may be similar to the embodiment of FIGs. 4 to 6. However, the lifter 2 in FIG. 9 comprises a central radar transducer 56, which may be arranged at a center of the supporting structure 18 and another radar transducer 54, which may be arranged on the supporting structure 18 between the central radar transducer 56 and the first radar transducer 22. The radar transducers 40 and 54 may be included in the radar system as an option.

The non-optical wave based system of the lifter 2 may be further configured to perform a calibration of the transducers, which may be radar and / or ultrasound transducers. The lifter 2 may comprise an optical device, in particular a laser system (not shown), which may be applied to measure the atmospheric conditions. For example, the laser system may be configured to determine an atmospheric pressure, a humidity and / or a salinity of the atmosphere. Information, which is provided by this system, may be applied to calibrate the radar and / or ultrasound transducers of the non-optical wave based system.. The determined atmospheric conditions may be taken into account for the distance measurement of the transducers.

Furthermore, the lifter 2 may be configured to perform an alternative or additional method for calibrating the non-optical wave based system. For example, the radar system or the ultrasound system may be calibrated. A metallic part or a part of the rotor blade 4 may be allocated in front of one of the transducers 22, 24, 40, 42 and 48 at a known distance. A measurement may be performed and the measured values of said transducer 22, 24, 40, 42 and 48 may be read out. The measurement values of the transducer 22, 24, 40, 42 and 48 may be matched with the known distance of the object, i.e. the metallic part or the rotor blade 4 part. A measured distance may be matched with the known distance of the object and the transducer 22, 24, 40, 42 and 48 may be calibrated to the atmospheric conditions. In particular, the transducer 22, 24, 40, 42 and 48 may be calibrated to a degree of salinity, humidity and / or to an atmospheric pressure.

## Claims

1. A method of operating a lifter (2) for handling a rotor blade (4) of a wind turbine, the lifter (2) comprising at least one device (6, 8), for contacting an outer surface of the rotor blade, the lifter (2) further comprises a non-optical wave based system for emission of a primary signal and for detection of a secondary signal, by the steps of:
a) emitting a primary signal in a direction towards the rotor blade (4) and detecting a secondary signal which is reflected at the rotor blade (4),
b) analyzing the secondary signal to determine a position of the rotor blade (4) with respect to the lifter (2), **characterised in that** further steps are:
c) determining at least a section of an airfoil profile along a cross-section of the rotor blade (4),
d) determining a plurality of theoretical airfoil profiles along various cross-sections of the rotor blade (4) from a model of the rotor blade,
e) matching at least the determined section of the airfoil profile with one of the plurality of the theoretical airfoil profiles to determine a longitudinal position of the lifter (2) with respect to the rotor blade.
wherein the lifter (2) comprises at least one grabbing jaw (6, 8) having an antagonistic pair of arms (10, 12, 14, 16) which are moveable with respect to each other, wherein a direction of movement of at least one of the arms (10, 12, 14, 16) of the grabbing jaws (6, 8) defines a grabbing plane (E1, E2), and the method further comprises the steps of:
f) determining a tilting angle (α1, α2) between the grabbing plane (E1, E2) and a longitudinal direction of the rotor blade,
g) determining at least a section of a tilted airfoil profile of the rotor blade (4),
h) determining a plurality of theoretical tilted airfoil profiles from the model, wherein the theoretical tilted airfoil profiles are tilted with respect to a longitudinal direction of the rotor blade (4) by an angle which is substantially equal to the determined tilting angle, and
i) matching at least the determined tilted airfoil profile with one of the plurality of theoretical tilted airfoil profiles to determine a longitudinal position of the lifter (2) with respect to the rotor blade (4).

2. The method according to anyone of the preceding claims, wherein the signal is a radar signal and / or a sound signal, in particular an ultrasound signal.

3. A lifter (2) for handling a rotor blade (4) of a wind turbine, the lifter (2) comprising at least one device(6, 8) for contacting an outer surface of the rotor blade (4), wherein the lifter further comprises a non-optical wave based system (22, 24, 3) for emission of a primary signal, which is directed towards the rotor blade (4), and for detection of a secondary signal, which is reflected at the rotor blade (4), for detecting a position of the rotor blade (4) with respect to the lifter (2) wherein the first device is a grabbing jaw (6, 8) having an antagonistic pair of arms (10, 12, 14, 16) which are moveable with respect to each other, wherein a direction of movement of at least one of the arms (10, 12, 14, 16) of the grabbing jaws (6, 8) defines a grabbing plane (E1, E2), and a control unit (3) having a model of the rotor blade (4), **characterized in that** the control unit (3) is configured to perform steps c) to i) of the method according to claim 1.

4. The lifter according to claim 3, wherein the at least one device projects from a supporting structure (18) of the lifter (2) in an approach direction (A), and wherein the system comprises at least one transducer (22, 24) having a direction of emission, which directs substantially towards the approach direction (A).

5. The lifter according to claim 3 or 4, comprising a supporting structure (18), the first device (6) and a second device (8) for contacting the outer surface of the rotor blade, wherein the first device (6) and the second device (8) are mounted on the supporting structure (18) having a clearance (B1) between each other which defines a first transverse direction, wherein the system comprises a first transducer (22) and a second transducer (24) which are mounted on the supporting structure (18) having a second clearance (B2) between each other which defines a second transverse direction, wherein the first transverse direction is substantially parallel to the second transverse direction.

6. The lifter according to claim 5, wherein the first device is the first grabbing jaw (6) and the second device is a second grabbing jaw (8), and wherein each grabbing jaw (6, 8) has a pair of antagonistic arms (10, 12, 14, 16) which are moveable with respect to each other, and wherein a direction of movement of at least one of the arms (10, 12, 14, 16) of the grabbing jaws (6, 8) defines the grabbing plane (E1, E2), wherein the directions of emission (A1, A2) of the transducers are tilted with respect to the grabbing plane (E1, E2).

7. The lifter according to claim 6, wherein the direction of emission (A1) of the first transducer (22) is tilted towards the second transducer (24) and vice versa.

8. The lifter according to claim 6 or 7, wherein a tiling angle (α1, α2) between the grabbing plane (E1, E2) and the direction of emission (A1, A2) of at least one of the transducers (22, 24) is greater than zero and lower than an aperture angle of the transducer, in particular, the tiling angle is greater than 5° and lower than 15°, in particular the tiling angle is approximately equal to 5°.

9. The lifter according to anyone of claims 3 to 8, further comprising a laser device or an inclinometer for determination of an orientation of the lifter (2).

10. The lifter according to anyone of claims 6 to 9, wherein the system comprises a third transducer (40, 46) and a fourth transducer (42, 48), wherein the third transducer (40, 46) is mounted on a first arm (10, 14) and the fourth transducer (42, 48) is mounted on a second arm (12, 16) of at least one of the grabbing jaws (6, 8).

11. The lifter according to claim 10, wherein a direction of emission (A3) of the third transducer (40, 46) and a direction of emission (A4) of the fourth transducer (42, 48) intersect in an obtuse angle and the third transducer (40, 46) and the fourth transducer (42, 48) are arranged substantially opposite to each other, when the grabbing jaw (6, 8) is in a closed position.

12. The lifter according to claim 10 or 11, further comprising a fifth transducer (44) which is mounted on either the first or the second arm (10, 12, 14, 16) of the at least one grabbing jaw, wherein the fifth transducer (44) is arranged on the at least one grabbing jaw (6, 8) to have a direction of emission (A5) which is tilted with respect to a line connecting the third and fourth transducer (40, 42, 46, 48), when the grabbing jaw (6, 8) is in a closed position.

13. The lifter (2) according to anyone of claims 10 to 12, wherein the control unit (3) is further configured to:
a) evaluate measured values of at least one of the third to fifth transducer (40, 42, 46, 48, 44) to determine the section of an airfoil profile along a cross-section of the rotor blade (4).

14. The lifter according to anyone of claims 3 to 13, wherein the non-optical wave based system (22, 24, 3) is a radar system and the at least one transducer (22, 24) is a radar transducer.

15. A system comprising a lifter (2) according to claim 14 and a rotor blade (4), wherein the rotor blade (4) comprises a radar reflector (34) which projects substantially between a root (36) and a tip (38) of the rotor blade (4), wherein the radar reflector (34) is a lightning mesh and / or a carbon fiber mesh which is embedded in the rotor blade (4).

16. The method of operating a lifter according to claims 1 or 2, comprising the steps of calibrating the non-optical wave based system (22, 24, 3) by measuring atmospheric conditions, such as an atmospheric pressure, a humidity and / or a salinity of the atmosphere, to calibrate transducers (22, 24) according to the atmospheric conditions, wherein an optical device, such as a laser, is applied to measure the atmospheric conditions.

17. The method operating a lifter according to claims 1 or 2, comprising the steps of calibrating the non-optical wave based system, allocating a metallic part or a rotor blade (4) part in front of a transducer (22, 24) at a known distance, reading out measurement values of the transducer (22, 24) to calibrate the measured values of the transducer (22, 24) to the known distance so as to calibrate the transducer (22, 24) to the atmospheric conditions, such as a degree of salinity, humidity and / or to an atmospheric pressure.

## Patentansprüche

1. Verfahren zum Betreiben eines Hebers (2) zur Handhabung eines Rotorblatts (4) einer Windenergieanlage, wobei der Heber (2) wenigstens eine Vorrichtung (6, 8) zur Anlage an einer Außenfläche des Rotorblatts umfasst, wobei der Heber (2) ferner ein auf nicht optischen Wellen beruhendes System zur Abgabe eines Primärsignals und zur Erfassung eines Sekundärsignals umfasst, durch die folgenden Schritte:
a) Abgeben eines Primärsignals in einer Richtung zu dem Rotorblatt (4) hin und Erfassen eines Sekundärsignals, das am Rotorblatt (4) reflektiert wird,
b) Analysieren des Sekundärsignals zur Bestimmung einer Position des Rotorblatts (4) bezüglich des Hebers (2),
**dadurch gekennzeichnet, dass** weitere Schritte sind:
c) Bestimmen wenigstens eines Abschnitts eines aerodynamischen Profils längs eines Querschnitts des Rotorblatts (4),
d) Bestimmen mehrerer theoretischer aerodynamischer Profile längs verschiedener Querschnitte des Rotorblatts (4) aus einem Modell des Rotorblatts,
e) Abgleichen wenigstens des bestimmten Abschnitts des aerodynamischen Profils mit einem der mehreren theoretischen aerodynamischen Profile zur Bestimmung einer Längsposition des Hebers (2) bezüglich des Rotorblatts,
wobei der Heber (2) wenigstens eine Greifbacke (6, 8) mit zwei entgegengesetzt wirkenden Armen (10, 12, 14, 16) umfasst, die relativ zueinander beweglich sind, wobei eine Bewegungsrichtung wenigstens eines der Arme (10, 12, 14, 16) der Greifbacken (6, 8) eine Greifebene (E1, E2) definiert und das Verfahren ferner die folgenden Schritte umfasst:
f) Bestimmen eines Kippwinkels (α1, α2) zwischen der Greifebene (E1, E2) und einer Längsrichtung des Rotorblatts,
g) Bestimmen wenigstens eines Abschnitts eines gekippten aerodynamischen Profils des Rotorblatts (4),
h) Bestimmen mehrerer theoretischer gekippter aerodynamischer Profile aus dem Modell, wobei die theoretischen gekippten aerodynamischen Profile bezüglich einer Längsrichtung des Rotorblatts (4) um einen Winkel gekippt sind, der im Wesentlichen gleich dem bestimmten Kippwinkel ist, und
i) Abgleichen wenigstens des bestimmten gekippten aerodynamischen Profils mit einem der mehreren theoretischen gekippten aerodynamischen Profile zur Bestimmung einer Längsposition des Hebers (2) bezüglich des Rotorblatts (4).

2. Verfahren nach einem der vorhergehenden Ansprüche, wobei das Signal ein Radarsignal und/oder ein Schallsignal, insbesondere ein Ultraschallsignal ist.

3. Heber (2) zur Handhabung eines Rotorblatts (4) einer Windenergieanlage, wobei der Heber (2) wenigstens eine Vorrichtung (6, 8) zur Anlage an einer Außenfläche des Rotorblatts (4) umfasst, wobei der Heber ferner ein auf nicht optischen Wellen beruhendes System (22, 24, 3) zur Abgabe eines Primärsignals, das zu dem Rotorblatt (4) hin geleitet wird, und zur Erfassung eines Sekundärsignals umfasst, das am Rotorblatt (4) reflektiert wird, um eine Position des Rotorblatts (4) bezüglich des Hebers (2) zu erfassen, wobei die erste Vorrichtung eine Greifbacke (6, 8) mit zwei entgegengesetzt wirkenden Armen (10, 12, 14, 16) ist, die relativ zueinander beweglich sind, wobei eine Bewegungsrichtung wenigstens eines der Arme (10, 12, 14, 16) der Greifbacken (6, 8) eine Greifebene (E1, E2) definiert, sowie eine Steuereinheit (3), die ein Modell des Rotorblatts (4) aufweist, **dadurch gekennzeichnet, dass** die Steuereinheit (3) so ausgebildet ist, dass sie die Schritte c) bis i) des Verfahrens nach Anspruch 1 durchführt.

4. Heber nach Anspruch 3, wobei die wenigstens eine Vorrichtung in einer Annäherungsrichtung (A) von einer Tragstruktur (18) des Hebers (2) hervorsteht und wobei das System wenigstens einen Wandler (22, 24) umfasst, der eine Emissionsrichtung hat, die im Wesentlichen zu der Annäherungsrichtung (A) hin gerichtet ist.

5. Heber nach Anspruch 3 oder 4, mit einer Tragstruktur (18), der ersten Vorrichtung (6) und einer zweiten Vorrichtung (8) zur Anlage an der Außenfläche des Rotorblatts, wobei die erste Vorrichtung (6) und die zweite Vorrichtung (8) an der Tragstruktur (18) mit einem Zwischenraum (B1) dazwischen befestigt sind, der eine erste Querrichtung definiert, wobei das System einen ersten Wandler (22) und einen zweiten Wandler (24) umfasst, die an der Tragstruktur (18) mit einem zweiten Zwischenraum (B2) dazwischen befestigt sind, der eine zweite Querrichtung definiert, wobei die erste Querrichtung zur zweiten Querrichtung im Wesentlichen parallel ist.

6. Heber nach Anspruch 5, wobei die erste Vorrichtung die erste Greifbacke (6) ist und die zweite Vorrichtung eine zweite Greifbacke (8) ist und wobei jede Greifbacke (6, 8) zwei entgegengesetzt wirkende Arme (10, 12, 14, 16) umfasst, die relativ zueinander beweglich sind, und wobei eine Bewegungsrichtung wenigstens eines der Arme (10, 12, 14, 16) der Greifbacken (6, 8) die Greifebene (E1, E2) definiert, wobei die Emissionsrichtungen (A1, A2) der Wandler bezüglich der Greifebene (E1, E2) gekippt sind.

7. Heber nach Anspruch 6, wobei die Emissionsrichtung (A1) des ersten Wandlers (22) zu dem zweiten Wandler (24) hin gekippt ist und umgekehrt.

8. Heber nach Anspruch 6 oder 7, wobei ein Kippwinkel (α1, α2) zwischen der Greifebene (E1, E2) und der Emissionsrichtung (A1, A2) wenigstens eines der Wandler (22, 24) größer als null und kleiner als ein Öffnungswinkel des Wandlers ist, insbesondere der Kippwinkel größer als 5° und kleiner als 15° ist, insbesondere der Kippwinkel etwa gleich 5° ist.

9. Heber nach einem der Ansprüche 3 bis 8, ferner mit einer Laservorrichtung oder einem Neigungsmesser zur Bestimmung einer Ausrichtung des Hebers (2).

10. Heber nach einem der Ansprüche 6 bis 9, wobei das System einen dritten Wandler (40, 46) und einen vierten Wandler (42, 48) umfasst, wobei der dritte Wandler (40, 46) an einem ersten Arm (10, 14) und der vierte Wandler (42, 48) an einem zweiten Arm (12, 16) wenigstens einer der Greifbacken (6, 8) befestigt ist.

11. Heber nach Anspruch 10, wobei eine Emissionsrichtung (A3) des dritten Wandlers (40, 46) und eine Emissionsrichtung (A4) des vierten Wandlers (42, 48) sich unter einem stumpfen Winkel schneiden und der dritte Wandler (40, 46) und der vierte Wandler (42, 48) im Wesentlichen einander gegenüberliegend angeordnet sind, wenn sich die Greifbacke (6, 8) in einer geschlossenen Stellung befindet.

12. Heber nach Anspruch 10 oder 11, ferner mit einem fünften Wandler (44), der entweder am ersten oder am zweiten Arm (10, 12, 14, 16) der wenigstens einen Greifbacke befestigt ist, wobei der fünfte Wandler (44) an der wenigstens einen Greifbacke (6, 8) so angeordnet ist, dass er eine Emissionsrichtung (A5) hat, die bezüglich einer den dritten und den vierten Wandler (40, 42, 46, 48) verbindenden Linie geneigt ist, wenn sich die Greifbacke (6, 8) in einer geschlossenen Stellung befindet.

13. Heber (2) nach einem der Ansprüche 10 bis 12, wobei die Steuereinheit (3) ferner so ausgebildet ist, dass sie:
a) Messwerte des dritten und/oder vierten und/oder fünften Wandlers (40, 42, 46, 48, 44) auswertet, um den Abschnitt eines aerodynamischen Profils längs eines Querschnitts des Rotorblatts (4) zu bestimmen.

14. Heber nach einem der Ansprüche 3 bis 13, wobei das auf nicht optischen Wellen beruhende System (22, 24, 3) ein Radarsystem ist und der wenigstens eine Wandler (22, 24) ein Radarwandler ist.

15. System mit einem Heber (2) nach Anspruch 14 und einem Rotorblatt (4), wobei das Rotorblatt (4) einen Radarreflektor (34) umfasst, der im Wesentlichen zwischen einer Wurzel (36) und einer Spitze (38) des Rotorblatts (4) projiziert, wobei der Radarreflektor (34) ein Blitzgitter und/oder ein Carbonfasergitter ist, das in das Rotorblatt (4) eingelassen ist.

16. Verfahren zum Betreiben eines Hebers nach Anspruch 1 oder 2, mit den Schritten des Kalibrierens des auf nicht optischen Wellen beruhenden Systems (22, 24, 3) durch Messen atmosphärischer Bedingungen wie etwa eines Atmosphärendrucks, einer Feuchtigkeit und/oder einer Salzhaltigkeit der Atmosphäre, zur Kalibrierung von Wandlern (22, 24) entsprechend den atmosphärischen Bedingungen, wobei eine optische Vorrichtung wie etwa ein Laser zur Messung der atmosphärischen Bedingungen angewendet wird.

17. Verfahren zum Betreiben eines Hebers nach Anspruch 1 oder 2, mit den Schritten des Kalibrierens des auf nicht optischen Wellen beruhenden Systems, des Zuweisens eines metallischen Teils oder eines Teils des Rotorblatts (4) vor einem Wandler (22, 24) in einem bekannten Abstand, des Auslesens von Messwerten des Wandlers (22, 24) zum Einstellen der Messwerte des Wandlers (22, 24) auf den bekannten Abstand, um den Wandler (22, 24) so auf die atmosphärischen Bedingungen wie etwa einen Salzhaltigkeitsgrad, einen Feuchtigkeitsgrad und/oder einen Atmosphärendruck zu kalibrieren.

## Revendications

1. Procédé de mise en oeuvre d'un moyen de levage (2) pour le maniement d'une pale de rotor (4) d'une éolienne, le moyen de levage (2) présentant au moins un dispositif (6, 8) pour contacter une surface extérieure de la pale de rotor, le moyen de levage (2) présentant en outre un système basé sur des ondes non-optiques pour l'émission d'un signal primaire et la détection d'un signal secondaire au moyen des étapes suivantes :
a) l'émission d'un signal primaire dans un sens vers la pale de rotor (4) et la détection d'un signal secondaire qui est réfléchi sur la pale de rotor (4),
b) l'analyse du signal secondaire pour déterminer une position de la pale de rotor (4) par rapport au moyen de levage (2),
**caractérisé en ce que** des étapes supplémentaires sont :
c) la détermination d'au moins un tronçon de profil aérodynamique le long d'une section transversale de la pale de rotor (4),
d) la détermination d'une pluralité de profils aérodynamiques théoriques le long de différentes sections transversales de la pale de rotor (4) à partir d'un modèle de la pale de rotor,
e) la mise en correspondance au moins du tronçon déterminé du profil aérodynamique avec l'un des plusieurs profiles aérodynamiques théoriques pour déterminer une position longitudinale du moyen de levage (2) par rapport à la pale de rotor,
le moyen de levage (2) comportant au moins une mâchoire de préhension (6, 8) qui présente deux bras antagonistes (10, 12, 14, 16) mobiles l'un par rapport à l'autre, un sens de mouvement d'au moins l'un des bras (10, 12, 14, 16) des mâchoires de préhension (6, 8) définissant un plan de préhension (E1, E2), et le procédé comprenant en outre les étapes suivantes :
f) la détermination d'un angle d'inclinaison (α1, α2) entre le plan de préhension (E1, E2) et un sens longitudinal de la pale de rotor,
g) la détermination d'au moins un tronçon d'un profil aérodynamique incliné de la pale de rotor (4),
h) la détermination de plusieurs profils aérodynamiques inclinés théoriques à partir du modèle, les profils aérodynamiques inclinés théoriques étant inclinés par rapport à un sens longitudinal de la pale de rotor (4) d'un angle qui est sensiblement égal à l'angle d'inclinaison déterminé, et
i) la mise en correspondance au moins du profil aérodynamique incliné déterminé avec l'un des plusieurs profils aérodynamiques inclinés théoriques pour déterminer une position longitudinale du moyen de levage (2) par rapport à la pale de rotor (4).

2. Procédé selon l'une des revendications précédentes, le signal étant un signal radar et/ou un signal acoustique, en particulier un signal ultrasonore.

3. Moyen de levage (2) pour le maniement d'une pale de rotor (4) d'une éolienne, le moyen de levage (2) comportant au moins un dispositif (6, 8) pour contacter une surface extérieure de la pale de rotor (4), le moyen de levage présentant en outre un système (22, 24, 3) basé sur des ondes non-optiques pour l'émission d'un signal primaire dirigé vers la pale de rotor (4) et pour la détection d'un signal secondaire réfléchi sur la pale de rotor (4) pour détecter une position de la pale de rotor (4) par rapport au moyen de levage (2), le premier dispositif étant une mâchoire de préhension (6, 8) qui présente deux bras antagonistes (10, 12, 14, 16) mobiles l'un par rapport à l'autre, un sens de mouvement d'au moins l'un des bras (10, 12, 14, 16) des mâchoires de préhension (6, 8) définissant un plan de préhension (E1, E2), et une unité de commande (3) qui présente un modèle de la pale de rotor (4), **caractérisé en ce que** l'unité de commande (3) est réalisée de manière à exécuter les étapes c) à i) du procédé selon la revendication 1.

4. Moyen de levage selon la revendication 3, ledit au moins un dispositif faisant saillie d'une structure de support (18) du moyen de levage (2) dans un sens d'approche (A), et le système comportant au moins un transducteur (22, 24) qui présente un sens d'émission sensiblement dirigé vers le sens d'approche (A).

5. Moyen de levage selon la revendication 3 ou 4, comprenant une structure de support (18), le premier dispositif (6) et un deuxième dispositif (8) pour contacter la surface extérieure de la pale de rotor, le premier dispositif (6) et le deuxième dispositif (8) étant agencés sur la structure de support (18) avec un espace (B1) entre eux qui définit un premier sens transversal, le système comportant un premier transducteur (22) et un deuxième transducteur (24) qui sont montés sur la structure de support (18) avec un deuxième espace (B2) entre eux qui définit un deuxième sens transversal, le premier sens transversal étant sensiblement parallèle au deuxième sens transversal.

6. Moyen de levage selon la revendication 5, le premier dispositif étant la première mâchoire de préhension (6), et le deuxième dispositif étant une deuxième mâchoire de préhension (8), et chaque mâchoire de préhension (6, 8) présentant deux bras antagonistes (10, 12, 14, 16) qui sont mobiles l'un par rapport à l'autre, et un sens de mouvement d'au moins l'un des bras (10, 12, 14, 16) des mâchoires de préhension (6, 8) définissant le plan de préhension (E1, E2), les sens d'émission (A1, A2) des transducteurs étant inclinés par rapport au plan de préhension (E1, E2).

7. Moyen de levage selon la revendication 6, le sens d'émission (A1) du premier transducteur (22) étant incliné vers le deuxième transducteur (24) et vice versa.

8. Moyen de levage selon la revendication 6 ou 7, un angle d'inclinaison (α1, α2) entre le plan de préhension (E1, E2) et le sens d'émission (A1, A2) d'au moins l'un des transducteurs (22, 24) étant supérieur à zéro et inférieur à un angle d'ouverture du transducteur, l'angle d'inclinaison étant en particulier supérieur à 5° et inférieur à 15°, l'angle d'inclinaison étant en particulier approximativement égal à 5°.

9. Moyen de levage selon l'une des revendications 3 à 8, comprenant en outre un dispositif à laser ou un inclinomètre pour la détermination d'une orientation du moyen de levage (2).

10. Moyen de levage selon l'une des revendications 6 à 9, le système comprenant un troisième transducteur (40, 46) et un quatrième transducteur (42, 48), le troisième transducteur (40, 46) étant monté sur un premier bras (10, 14), et le quatrième transducteur (42, 48) étant monté sur un deuxième bras (12, 16) d'au moins l'une des mâchoires de préhension (6, 8).

11. Moyen de levage selon la revendication 10, un sens d'émission (A3) du troisième transducteur (40, 46) et un sens d'émission (A4) du quatrième transducteur (42, 48) se coupant selon un angle obtus, et le troisième transducteur (40, 46) et le quatrième transducteur (42, 48) étant agencés sensiblement opposés l'un à l'autre lorsque la mâchoire de préhension (6, 8) est dans une position fermée.

12. Moyen de levage selon la revendication 10 ou 11, comprenant en outre un cinquième transducteur (44) qui est monté sur le premier ou le deuxième bras (10, 12, 14, 16) de ladite au moins une mâchoire de préhension, le cinquième transducteur (44) étant agencé sur ladite au moins une mâchoire de préhension (6, 8) de manière à avoir un sens d'émission (A5) qui est incliné par rapport à une ligne reliant le troisième et le quatrième transducteur (40, 42, 46, 48) lorsque la mâchoire de préhension (6, 8) est dans une position fermée.

13. Moyen de levage (2) selon l'une des revendications 10 à 12, l'unité de commande (3) étant en outre réalisée de manière à :
a) évaluer des valeurs mesurées d'au moins l'un du troisième au cinquième transducteur (40, 42, 46, 48, 44) pour déterminer le tronçon d'un profil aérodynamique le long d'une section transversale de la pale de rotor (4).

14. Moyen de levage selon l'une des revendications 3 à 13, le système (22, 24, 3) basé sur des ondes non optiques étant un système radar et ledit au moins un transducteur (22, 24) étant un transducteur radar.

15. Système comportant un moyen de levage (2) selon la revendication 14 et une pale de rotor (4), la pale de rotor (4) présentant un réflecteur radar (34) qui projette sensiblement entre un pied (36) et une extrémité (38) de la pale de rotor (4), le réflecteur radar (34) étant un treillis de parafoudre et/ou un treillis de fibres de carbone encastré dans la pale de rotor (4).

16. Procédé de mise en oeuvre d'un moyen de levage selon les revendications 1 ou 2, comprenant les étapes d'étalonnage du système (22, 24, 3) basé sur des ondes non optiques en mesurant des conditions atmosphériques telles qu'une pression atmosphérique, une humidité et/ou une salinité de l'atmosphère pour étalonner des transducteurs (22, 24) selon les conditions atmosphériques, un dispositif optique tel qu'un laser étant utilisé pour mesurer les conditions atmosphériques.

17. Procédé de mise en oeuvre d'un moyen de levage selon les revendications 1 ou 2, comprenant les étapes d'étalonnage du système basé sur des ondes non optiques, l'attribution d'une pièce métallique ou d'une pièce de la pale de rotor (4) à une distance connue devant un transducteur (22, 24), la lecture de valeurs mesurées du transducteur (22, 24) pour étalonner les valeurs mesurées du transducteur (22, 24) à la distance connue de manière à étalonner le transducteur (22, 24) aux conditions atmosphériques telles qu'un degré de salinité, d'humidité et/ou une pression atmosphérique.
